(19) Europäisches Patentamt
European Patent Office
Office européen des brevets

(11) EP 0 556 654 B1

(12) EUROPEAN PATENT SPECIFICATION

(45) Date of publication and mention
of the grant of the patent:
07.05.1997 Bulletin 1997/19

(51) Int Cl.⁶: **H04N 1/46**

(21) Application number: 93101732.1

(22) Date of filing: 04.02.1993

(54) **A method for compressing color image data**

Verfahren zur Komprimierung von Farbbilddaten

Procédé pour la compression de données d'image en couleurs

(84) Designated Contracting States:
DE FR GB

(30) Priority: 19.02.1992 JP 69510/92

(43) Date of publication of application:
25.08.1993 Bulletin 1993/34

(73) Proprietor: YOZAN INC.
Tokyo 155 (JP)

(72) Inventors:
• Hong, Zi Quan - c/o Ezel Inc.
Tokyo 112 (JP)
• Kumagai, Ryohei - c/o Ezel Inc.
Tokyo 112 (JP)

(74) Representative: Grünecker, Kinkeldey,
Stockmair & Schwanhäusser Anwaltssozietät
Maximilianstrasse 58
80538 München (DE)

(56) References cited:
• PATENT ABSTRACTS OF JAPAN vol. 14, no. 434 (P-1107)18 September 1990 JP-A-21 70 192
• IBM TECHNICAL DISCLOSURE BULLETIN vol. 32, no. 3B, August 1989, ARMONK, NY,US pages 384 - 387 ANON 'Color Graphics Picture Segmentation'
• PATENT ABSTRACTS OF JAPAN vol. 13, no. 496 (E-843)9 November 1989 & JP-A-11 98 866
• IEEE TRANSACTIONS ON CONSUMER ELECTRONICS vol. 31, no. 3, August 1985, NEW YORK, NY,US pages 290 - 298 FUJIMORI ET AL 'NAPLPS VIDEOTEX FRAME CREATION SYSTEM WITH AUTOMATIC ENCODING OF INPUT IMAGES'

**Description**

The present invention relates to a method for quantizing a color image.

From IBM Technical Disclosure Bulletin, Vol. 32, No. 3B, "Color Graphics Picture Segmentation", a procedure in known by which an image is segmented into N regions, each characterised by one of n different colors that occur most frequently in the picture elements of the original image. According to the described procedure, each color component of each pixel is expressed an 8-bit code. To avoid unduly complex implementation, only the two highest order bits of each color component code are considered. This means that the 256 possible values of each color component will be considered, not individually, but as members of four possible groups. Considering all three color components, the total number of allowable combinations of color component values is, therefore, 64. Thus, as image originally consisting of pixels with 3 8-bit color components , red, green and blue, may be compressed into an image having equal or less than 64 different colors.

In JP-A-2170192 it is suggest to disregard in a first color compressing means low-order bits of brightness data R, G and B, of the original image, further compressing the data and storing it in a memory 13. A conversion unit converts the compressed image into closest representative color data, which is stored in a memory as the finally compressed data.

From JP-A-1198866 it is known to generate a histogram of the color of an input picture, determining therefrom the colors most common in the picture and converting the picture into a picture comprising only those most common colors.

It is necessary to distribute color of each pixel in an image into predetermined smaller number of colors for a method of compressing color image data. In this case, mutual similarities of colors are qualified beforehand and distributed into the most similar color, however, a measure in similarities is not fixed. For instance, when color distance is defined by Euclid distance. the amount of calculations becomes large. Also, when the color distance is defined by Humming distance, the error becomes larger than that of Euclid distance.

It is the object of the present invention to provide an improved method for quantizing a color image. This object is solved by the subject matter of claim 1.

In the following a preferred embodiment of the present invention is described in connection with the accompanying drawings.

Figure 1 is a flowchart showing an embodiment in this convention.

Figure 2 is a conceptional drawing to classify colors.

Figure 3 is a conceptional drawing to show representative code in each group.

Hereinafter, an embodiment of a method to compress color image data according to this invention is explained with reference to the attached drawings. RGB values of a pixel are represented by R, G, and B, then each of them is divided into the lower k bits R1, G1, B1 and the higher bits Ru, Gu, Bu, As a result, R, G, and B are represented as below.

$$R = Ru \times 2^k + R1$$

$$G = Gu \times 2^k + G1$$

$$B = Bu \times 2^k + B1$$

A representative code C is defined according to the higher bits Ru, Gu, and Bu in RGB, and colors are classified into groups.

If the number of bits in Ru, Gu, and Bu is for example m bits, then it is possible to join Ru, Gu and Bu together, in sequence, to generate a representative code given by :

$$C = Ru \times 2^{2m} + Gu \times 2^m + Bu$$

The numbers of representative codes that are available to change the order are $2^{3m}$, then it is represented as below and k-th representative code is $C_k$.

$$N = 2^{3m}$$

Suppose the number of bits in the lower bits R1, G1, and B1 is n, then a representative code $C_k$ represents $2^{3n}$

colors. The colors involved in a representative code are different from only the lower n bits, then the color distance (Hamming Distance ) is represented by $3 \times 2^{n-1}$. The classification according to a representative code Ck involves colors of mutually short color distance. Classification of group is appropriate.

Each group selects a color representing that group. Suppose each color and the number of pixels in the representative code $C_k$ are as follows:

color : $\qquad C_{ki}$
number of pixels : $\qquad P\,n_{ki}$

$$i = 1 - 2^{3n},$$

then the representative color $Crep_k$ obtaining the minimum square error of the color is shown by the following formula.

$$Crep_k = ( \Sigma C_{ki} \cdot Pn_{ki} ) / ( \Sigma Pn_{ki} )$$

To simplify the calculation, it is assumed as below.

$$Crep_K = C_{ki} = \arg\max_{C_{ki}} \{ Pn_{ki} \}$$

By operating $Crep_k$, the calculation is simplified and the error is very small. The error $\varepsilon$ is the largest when all of the colors from $C_{ki}$ to $C_k2^{3n}$ are equal in the arrangement of colors. It is expressed by the formula below.

$$\varepsilon \leq \left( \sum_{1}^{2^{3n}} i - 1 \right) / 2^{3n} = 2^{3n-1} - 0.5$$

Evaluating the color by color distance of error and calculating the error of color distance, the formula below is true.

$$\varepsilon d \leq 3 \times ( 2^n - 1 )$$

The compression of color image data ( quantization ) can be calculated easily using this good approximation.

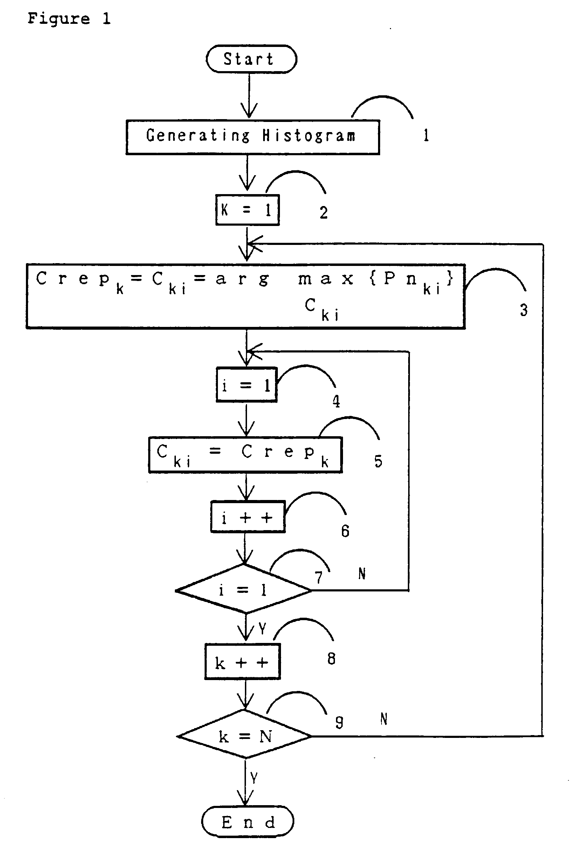

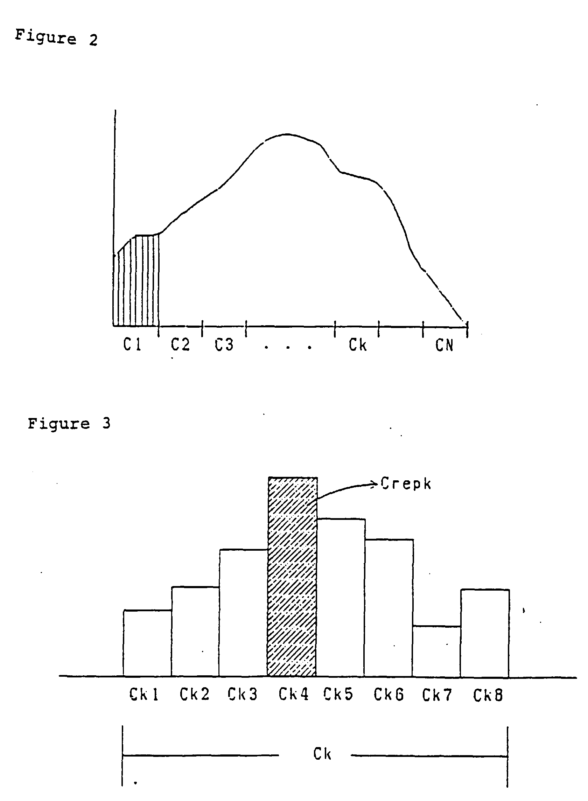

Figure 1 is a flowchart showing the above processing. Step 1 generates a histogram according to the color codes ( Figure 2 ), step 2, step 3. step 8 and step 9 calculate the color in the maximum number of pixels of each group $C_k$, step 4, step 5, step 6 and step 7 convert color in each group into the color of the maximum number of pixels ( representative color ).

A bit in the lower bit n applies any value and obtains a good result which is obtained by a simple model in which the number of color in each group is eight when $n = 1$.

In this case, the error is three or four in the maximum in two colors of a group and the error of color distance is two.

According to this invention as mentioned above, data of an original image can be compressed in a good similarities, and it is very effective to preserve the image. Also, data compression removes noise of the original image in matching of color picture, abstract only appropriate data for matching, then more precise recognition is possible. The main elements are preserved and other elements are converted into the neighbor color, and original color elements can be reserved.

## Claims

1. A method for quantizing a color image, each pixel of said color image being represented by (m+n) bit component data for each component color red, blue and green respectively, said method comprising the steps of:

   defining as color data for each pixel the upper m bits of each component color red, green and blue, respectively,

   defining representative color codes by sequentially concatenating for each pixel the upper m bits of each component color red, green and blue, respectively

   defining sub-color codes by sequentially concatenating for each pixel the lower n bits of each component color red, green and blue, respectively,

   determining for each group of pixels consisting of pixels with same representative color code, which sub-color code is most common among the pixels of the respective group and

   assigning to all pixels of said group a common color data corresponding to the original (m+n) bit component data of those pixels which have been found to have the most common sub-color code.

## Patentansprüche

1. Verfahren zum Quantisieren eines Farbbildes, wobei jeder Pixel des Farbbildes durch (m+n)-Bit-Komponentendaten für jede der Farben Rot, Blau und Grün repräsentiert wird, wobei das Verfahren folgende Schritte aufweist:

   Definieren der oberen m-Bit jeder Komponentenfarbe Rot, Grün und Blau als Farbdaten für jeden Pixel,

   Definieren repräsentativer Farbcodes durch Aneinanderreihen der oberen m-Bit jeder Komponentenfarbe Rot, Grün und Blau für jedes Pixel,

   Definieren von Unterfarbcodes durch Aneinanderreihen der unteren n-Bit jeder Komponentenfarbe Rot, Grün und Blau für jedes Pixel,

   Bestimmen für jede Gruppe von Pixel, die aus Pixel mit gleichem repräsentativen Farbcode bestehen, welcher Unterfarbcode am häufigsten innerhalb der entsprechenden Gruppe vorkommt und

   Zuweisen gemeinsamer Farbdaten an alle Pixel einer Gruppe, entsprechend den ursprünglichen (m+n)-Bitkomponentendaten derjenigen Pixel, für die festgestellt wurde, daß sie den am häufigsten vorkommenden Unterfarbcode aufweisen.

## Revendications

1. Procédé pour quantifier une image en couleur, chaque pixel de ladite image en couleur étant représenté respectivement par des données de composantes de (m+n) bits pour chaque couleur composante rouge, bleue et verte, ledit procédé comprenant les étapes:

   de définition en tant que données de couleur pour chaque pixel, respectivement des m bits supérieurs de chaque couleur composante rouge, bleue et verte,

   de définition de codes de couleur représentatifs par concaténation séquentielle, respectivement pour chaque pixel, des m bits supérieurs de chaque couleur composante rouge, bleue et verte,

   de définition de codes de sous-couleurs, respectivement par concaténation séquentielle, respectivement pour chaque pixel, des n bits inférieurs de chaque couleur composante rouge, bleue et verte,

   de détermination pour chaque groupe de pixels constitués de pixels de même code de couleur représentatif, du code de sous-couleur qui est le plus commun parmi les pixels du groupe respectif, et

   d'affectation à tous les pixels dudit groupe, de données de couleur commune correspondant aux données composantes d'origine de (m+n) bits de ces pixels qui se sont avérés avoir le code de sous-couleur le plus commun.

Figure 1

Figure 2

Figure 3